# EUROPÄISCHE PATENTSCHRIFT

(11) **EP 0 930 437 B1**
(45) Veröffentlichungstag und Bekanntmachung des Hinweises auf die Patenterteilung: **29.08.2001**
(21) Anmeldenummer: 99100521.6
(22) Anmeldetag: 13.01.1999
(51) Int. Cl.: F16B 25/00, F16B 25/10

(54) **Gewindeschneidende Schraube**
Thread tapping screw
Vis autotaraudante

(30) Priorität: 15.01.1998 DE 19801100
(43) Veröffentlichungstag der Anmeldung: 21.07.1999
(73) Patentinhaber: TOGE-Dübel A. Gerhard KG, 90431 Nürnberg (DE)
(72) Erfinder: Gerhard, Anton, 90427 Nürnberg (DE)
(74) Vertreter: Rau, Manfred, Dr. Dipl.-Ing.

(56) Entgegenhaltungen:
- EP-A- 0 589 398
- EP-A- 0 623 759
- DE-U- 8 103 990
- DE-U- 29 704 226

## Beschreibung

Die Erfindung betrifft eine gewindeschneidende Schraube, insbesondere Betonschraube, nach dem Oberbegriff des Anspruches 1.

Aus DE 297 04 226.2 U1 (entsprechend WO-A-98/04842) ist eine derartige Schraube bekannt, die zwischen den Windungen des Gewindes einen im wesentlichen zylindrischen Kern aufweist. Diese Schraube ist zum Einschrauben auch in Beton gut geeignet; unter bestimmten Bedingungen kann sich aber das Einschraub-Drehmoment während des Einschraubens in Beton deutlich erhöhen, was unerwünscht ist.

Aus der DE 27 54 870 C3 (entsprechend US-A 4,544,313) ist eine selbstschneidende Schraube bekannt, die ein scharfkantiges Gewinde aufweist. Zwischen den benachbarten Windungen des Gewindes ist eine Einschnürung vorgesehen, deren engste Stelle etwa in der Mitte zwischen den beiden Windungen liegt, wobei sich der Kern der Schraube ausgehend von den Fußenden zweier benachbarter Windungen verjüngt. Zweck dieser Ausgestaltung ist es zu erreichen, daß die Windungen über ihre gesamte Höhe als tragende Fläche wirken, wobei die Schraube weiterhin mit weniger Verformungsarbeit herstellbar sein soll als bekannte Schrauben. In die durch die Einschnürung gebildete Vertiefung kann das durch das Gewinde verdrängte Material wandern. Auch bei dieser Schraube hat sich gezeigt, daß beim Einschrauben eine Erhöhung des Einschraub-Drehmomentes auftreten kann.

Der Erfindung liegt daher die Aufgabe zugrunde, eine selbstschneidende Schraube der gattungsgemäßen Art so auszugestalten, daß einerseits das Gewinde im wesentlichen über seine volle Höhe tragen kann, daß andererseits aber eine Erhöhung des Einschraub-Drehmomentes auch beim Einschrauben in Beton o. dgl. nicht auftritt.

Diese Aufgabe wird erfindungsgemäß durch die Merkmale im Kennzeichnungsteil des Anspruches 1 gelöst. Durch die erfindungsgemäßen Maßnahmen wird erreicht, daß das durch die Schneidzähne des Gewindes herausgeschnittene Material entgegen der Einschraub-Längsrichtung in die zwischen benachbarten Windungen gebildete Kammer wandern kann, ohne wieder vor der nächsten Windung radial nach außen zu wandern und ggf. zu einer Erhöhung des Reibmomentes zu führen. Die Kammer nimmt das herausgeschnittene Material vollständig auf. Durch die Ausgestaltung des einen Kern-Abschnitts als sich entgegen der Einschraub-Längs-Richtung verjüngender Kern-Außenflächen-Abschnitt wird das Gewinde besonders gut abgestützt; es kommt nicht zu Gewindebrüchen. Des weiteren wird das Gewinde selber im Bohrloch, d. h. in dem durch die Schneidzähne geschnittenen Gewindegang zumindest auf der rückseitig zur Einschraub-Längs-Richtung liegenden Flanke über weitgehend seine volle Höhe abgestützt, so daß es nicht zu Ausbrüchen im Kantenbereich des Betons o. dgl. kommt. Dies führt dazu, daß das Gewinde über angenähert seine volle Höhe in dem durch die Schneidzähne geschnittenen Gewindegang im Beton o. dgl. trägt, d. h. es ergeben sich extrem hohe, bisher in der Praxis nicht erreichte Auszugswerte für die erfindungsgemäß ausgestaltete Betonschraube.

Weitere Merkmale, Vorteile und Einzelheiten der Erfindung ergeben sich aus der nachfolgenden Beschreibung eines Ausführungsbeispieles anhand der Zeichnung. Es zeigt:
- Fig. 1: eine Draufsicht auf eine Betonschraube,
- Fig. 2: eine Draufsicht auf eine vergrößerte Teildarstellung des Einführendes der Betonschraube,
- Fig. 3: eine Stirnansicht des Einführendes der Betonschraube in vergrößerter Darstellung,
- Fig. 4: einen Querschnitt durch die Betonschraube gemäß der Schnittlinie IV-IV in Fig. 1 in vergrößerter Darstellung,
- Fig. 5: einen Teil-Längsschnitt durch die Betonschraube gemäß der Schnittlinie V-V in Fig. 1 in stark vergrößerter Darstellung,
- Fig. 6: einen weiteren Teil-Längsschnitt durch die Betonschraube gemäß der Schnittlinie VI-VI in Fig. 1 in stark vergrößerter Darstellung und
- Fig. 7: eine Teildraufsicht auf eine abgewandelte Ausführungsform einer Schneidkerbe.

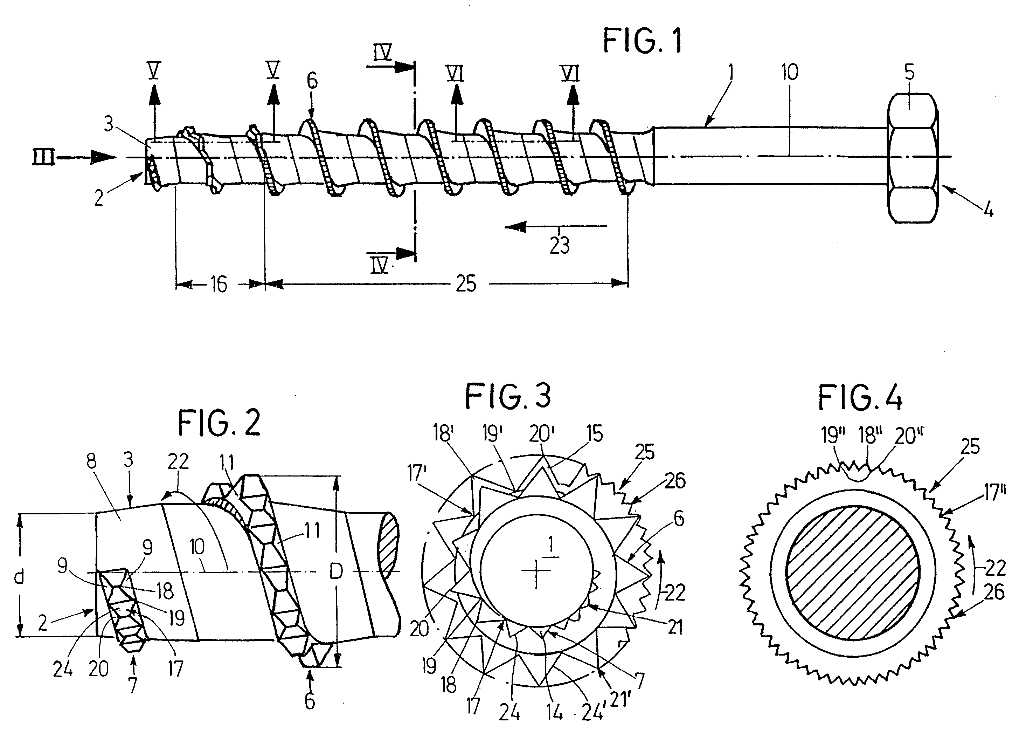

Die in Fig. 1 dargestellte Schraube weist einen Kern 1 auf, der an einem ersten Ende, dem Einführende 2, einen leicht verjüngten, kegelstumpfförmigen Abschnitt 3 aufweist. An einem zweiten Ende 4 des Kerns 1 ist ein beliebig gestalteter Schraubenkopf 5 ausgebildet. Auf einem Teil des Kerns 1 einschließlich des verjüngten Abschnitts 3 ist ein stegartig ausgebildetes eingängiges Gewinde 6 ausgeformt.

Wie den Figuren 2 bis 4 zu entnehmen ist, ist auf dem verjüngten Abschnitt 3 des Kerns 1 ein ansteigender Gewindeabschnitt 7 des Gewindes 6 ausgeformt, der am Einführende 2 des Kerns 1 aus der Oberfläche 8 des verjüngten Abschnitts 3 heraus beginnt und über eine halbe bis eine ganze Windung, d. h. eine Teilung t, des Gewindes 6 heraus auf die volle Gewindehöhe, d. h. den Außendurchmesser D des Gewindes 6 ansteigt. Die Flanken 9 des Gewindeabschnitts 7 steigen direkt aus der Oberfläche 8 des verjüngten Abschnitts 3 des Kerns 1 an und zwar unter einem Öffnungswinkel von etwa 60 °, d. h. die beiden Flanken 9 des Gewindeabschnitts 7 sind jeweils um etwa 30 ° gegenüber einem Radius auf die Mittel-Längs-Achse 10 des Kerns 1 geneigt. Der Öffnungswinkel sollte im Bereich von 50 ° bis 70 ° betragen. Der Durchmesser d des Kerns 1 an seinem Einführende 2 ist etwas kleiner als der Nenndurchmesser einer Bohrung, in die die Schraube eingesetzt werden soll. Der Nenndurchmesser einer Bohrung ist international genormt, beträgt also 4, 5, 6, 8, 10, 12, 14, 16, ... mm.

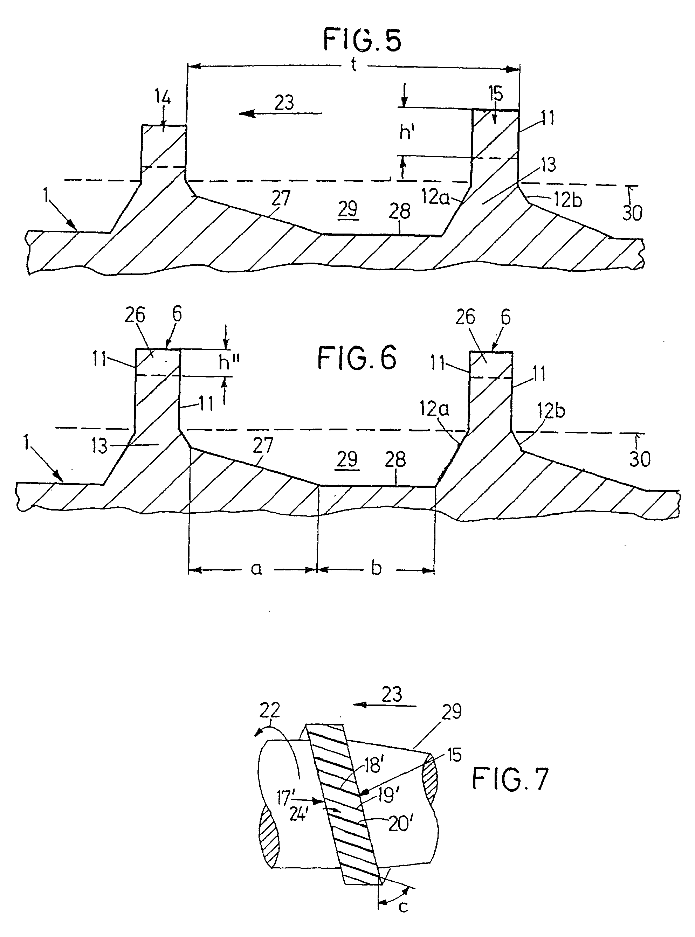

Hinter dem verjüngten Abschnitt 3 mit dem ansteigenden Gewindeabschnitt 7 ist das Gewinde 6 so ausgestaltet, wie es aus DE 297 04 226.2 U1 (entsprechend WO-A-98/04842) bekannt ist. Es weist entsprechend Fig. 5 und 6 zueinander parallele Flanken 11 auf, die parallel zu einem Radius auf die Mittel-Längs-Achse 10 verlaufen. Die Flanken 11 gehen jeweils mittels eines geneigten Fußabschnitts 12a bzw. 12b in den Kern 1 über, wobei der jeweilige Fußabschnitt 12a bzw. 12b gegenüber dem erwähnten Radius geneigt ist, so daß der durch die Fußabschnitte 12a, 12b begrenzte Fuß 13 des Gewindes 6 sich zum Kern 1 hin verbreitert. Der ansteigende Gewinde-Abschnitt 7 geht stetig in das sich anschließende Gewinde 6 über.

Der ansteigende Gewinde-Abschnitt 7 und höchstens die beiden sich anschließenden Windungen des Gewindes 6 sind mit Schneidzähnen 14 bzw. 15 versehen. Dort wo das Gewinde 6 mit Schneidzähnen 15 versehen ist, bildet es einen Schneiden-Abschnitt 16. Die Schneidzähne 14 im ansteigenden Gewindeabschnitt 7 werden im wesentlichen durch Schneidkerben 17 gebildet, die jeweils - wie Fig. 3 entnehmbar ist - die Form eines gleichschenkligen Dreiecks aufweisen. Die Längskanten 18, 19, 20 der Schneidkerben 17, d. h. die beiden Längskanten 18, 20 am Übergang zur Außenfläche 21 und die Längskante 19 am Grund der Schneidkerbe 17 verlaufen parallel zur Achse 10. Die - bezogen auf die Einschraub-Drehrichtung 22 - jeweils nacheilende Längskante 20 ist eine Schneidkante. Die zwischen dieser Schneidkante 20 und der am Grund der Schneidkerbe 17 verlaufenden Längskante 19 gebildete Fläche ist eine Abtransport-Fläche 24 für Bohrmehl. Wie insbesondere Figur 3 erkennen läßt, können die Schneidzähne 17 so angeordnet sein, daß die nacheilende Schneidkante 20 einer Schneidkerbe 17 die voreilende Längskante 18 der nächstfolgenden Schneidkerbe ist. In diesem Fall schrumpft die Außenfläche 21 auf eine solche Längskante zusammen, die jeweils eine Schneidkante ist. Für die Ausgestaltung der Schneidzähne 15 des Schneiden-Abschnitts 16 gilt die vorstehende Beschreibung, so daß ohne erneute Beschreibung dieselben Bezugsziffern jedoch mit einem hochgesetzten Strich verwendet werden. Die radiale Höhe h' der Schneidkerben 17' beträgt für Bohrungs-Nenndurchmesser von 5 mm 0,2 bis 0,5 mm und beispielsweise für Bohrungs-Nenndurchmesser von 16 mm 0,5 bis 0,8 mm.

Der sich an den Schneiden-Abschnitt 16 anschließende Gewindeabschnitt kann als einfacher Gewindeabschnitt mit der gleichen Grundform wie der Schneiden-Abschnitt 16, jedoch ohne Schneidzähne, und ggf. mit einem geringfügig verringerten Außendurchmesser D ausgebildet seien, wie in DE 297 04 226.2 U1 (entsprechend WO-A-98/04842) beschrieben. Beim Einschrauben der Schrauben in hochfesten Beton können die im Beton vorhandenen Kieselsteine jedoch ein Einschrauben erschweren. Für solche Fälle ist der sich an den Schneiden-Abschnitt 16 anschließende Abschnitt des Gewindes 6 als Mikroschneiden-Abschnitt 25 ausgestaltet, wie es insbesondere aus Fig. 4 und 6 ersichtlich ist. Hier sind Mikro-Schneidzähne 26 vorgesehen, die grundsätzlich so ausgebildet sind, wie es auch bereits für die Schneidzähne 14, 15 beschrieben wurde; es werden daher dieselben Bezugsziffern wie zuvor verwendet, jedoch mit einem hochgesetzten Doppelstrich. Die Mikro-Schneidzähne 26 weisen im Vergleich zu den Schneid-zähnen 15 eine erheblich geringere radiale Höhe h" von 0,1 bis 0,2 mm auf. Die Mikro-Schneidzähne 26 führen noch eine geringfügige Nach-Schneidarbeit aus. Für die Höhe h' gilt im Verhältnis zur Höhe h": 2 h" ≤ h' und bevorzugt 3 h" ≤ h' ≤ 7 h".

Wie insbesondere den Figuren 5 und 6 entnehmbar ist, ist der Kern 1 der Schraube nicht zylindrisch ausgebildet. Er weist vielmehr zwischen zwei benachbarten Windungen zwei Kern-Außenflächen-Abschnitte 27, 28 auf. Der in Einschraub-Längs-Richtung 23 voreilende Kern-Außenflächen-Abschnitt 27 verjüngt sich entgegen der Einschraub-Längs-Richtung 23. Der sich entgegen der Einschraub-Längs-Richtung 23 anschließende Abschnitt 28 ist zylindrisch ausgebildet. Der Abschnitt 27 erstreckt sich in Richtung der Achse 10 über eine Länge a, während der Abschnitt 28 sich über eine Länge b erstreckt. Es gilt a ≥ b. Durch diese Ausgestaltung wird zwischen den benachbarten Gewindegängen eine Kammer 29 gebildet, die - bezogen auf die in den Figuren 5 und 6 angedeutete Bohrlochwand 30 - sich erweitert. Der Kern-Außenflächen-Abschnitt 27 dient als Ablauffläche für das Bohrmehl, das überwiegend im Bereich des Kern-Außenflächen-Abschnitts 28 in der Kammer 29 gespeichert wird. Da das Volumen der Kammer 29 im Bereich des Abschnitts 28 größer als das Volumen des in die Bohrlochwand 30 geschnittenen Ganges ist, behindert das Bohrmehl den Einschraubvorgang nicht, d. h. es tritt keine Erhöhung des Drehmomentes beim Einschrauben der Schraube auf, das durch Reibung zwischen dem in der Kammer 29 gespeicherten Bohrmehl und der Bohrlochwand 30 gebildet werden könnte. Wie den Figuren 5 und 6 weiterhin entnehmbar ist, tragen die Windungen des Gewindes 6 über ihre volle Höhe in dem durch die Bohrlochwand 30 begrenzten Beton.

Wie in Fig. 7 angedeutet ist, können insbesondere die Schneidzähne 15 im Schneiden-Abschnitt 16 einen Verlauf aufweisen, durch den sie eine Gewindefunktion bekommen. Die Schneidkerben 17' sind in diesem Fall so ausgebildet, daß die jeweils in Einschraub-Drehrichtung 22 nacheilenden Längskanten 20' und damit die Abtransport-Flächen 24' der Schneidkerben 17' bezogen auf die Einschraub-Drehrichtung 22 und die Einschraub-Längsrichtung 23 nacheilen, so daß ein weitgehend reibungsfreier Transport des Bohrmehls durch die Schneidkerben 17' in die nachfolgenden Kammern 29 erfolgt. Die Schneidkerben 17' bilden also einen gewindeartigen Kanal mit großer Steigung c von 60 ° bis 80 ° bezogen auf die Einschub-Längs-Richtung 23. Diese Ausgestaltung kann selbstverständlich auch bei den Schneidzähnen 14 und den Mikro-Schneidzähnen 26 vorgesehen werden, obwohl dies dort wegen des relativ geringen Anfalls von Bohrmehl nicht so bedeutsam ist.

## Patentansprüche

1. Gewindeschneidende Schraube, insbesondere Betonschraube,
mit einem Kern (1) mit einer Mittel-Längs-Achse (10) und mit einer Einschraub-Längs-Richtung (23),
mit einem einstückig mit dem Kern (1) ausgebildeten Gewinde (6), das mit einem Fuß (13) in den Kern (1) übergeht und
mit im Bereich des Außenumfangs des Gewindes (6) angeordneten, zum Außenumfang hin offen ausgebildeten Schneidkerben (17),
**dadurch gekennzeichnet,**
**daß** zwischen zwei benachbarten Windungen ein sich an den Fuß (13) des Gewindes (6) anschließender und sich entgegen der Einschraub-Längsrichtung (23) verjüngender Kern-Außenflächen-Abschnitt (27) ausgebildet ist, und
daß sich an den sich verjüngenden Kern-Außenflächen-Abschnitt (27) entgegen der Einschraub-Längsrichtung (23) ein weiterer etwa zylindrischer Kern-Außenflächen-Abschnitt (28) anschließt, der eine Kammer (29) zur Aufnahme von Bohrmehl begrenzt.

2. Schraube nach Anspruch 1, **dadurch gekennzeichnet**,
**daß** für das Verhältnis der Länge a des sich verjüngenden Kern-Außenflächen-Abschnitts (27) entgegen der Einschraub-Längsrichtung (23) zur Länge b des zylindrischen Kern-Außenflächen-Abschnitts (28) entgegen der Einschraub-Längs-Richtung (23) gilt: a ≥ b.

## Claims

1. A thread-forming screw, in particular a concrete screw, comprising
a core (1), which has a central longitudinal axis (10) and a lengthwise screw-in direction (23);
a thread (6), which is designed in a single piece with the core (1) and which passes via a root (13) into the core (1); and
cutting notches (17), which are disposed in the vicinity of the outer circumference of the thread (6) and open toward the outer circumference;
**characterized**
**in that** a section (27) of the outer surface of the core (1) is formed between two adjacent turns, adjoining the root (13) of the thread (6) and tapering counter to the lengthwise screw-in direction (23); and
in that, counter to the lengthwise screw-in direction (23), the tapering section (27) of the outer surface of the core (1) is followed by another cylindrical section (28) of the outer surface of the core (1), which defines a chamber (29) for the accommodation of bore dust.

2. A screw according to claim 1, **characterized in that** a ≥ b applies to the ratio that the length a of the tapering section (27) of the outer surface of the core (1) counter to the lengthwise screw-in direction (23) bears to the length b of the cylindrical section (28) of the outer surface of the core (1) counter to the lengthwise screw-in direction (23).

## Revendications

1. Vis autotaraudeuse, en particulier vis à béton comprenant
un noyau (1) présentant un axe médian longitudinal (10) et une direction longitudinale de vissage (23),
un filetage (6) taillé d'une seule pièce avec le noyau (1), et fusionnant dans ledit noyau (1) par une base (13), et des encoches de sectionnement (17) situées dans la région du pourtour extérieur du filetage (6), et de réalisation ouverte en direction dudit pourtour extérieur,
caractérisée par le fait
qu'un segment (27) de la surface extérieure du noyau, ménagé entre deux spires voisines, se rattache à la base (13) du filetage (6) et se rétrécit en sens inverse de la direction longitudinale de vissage (23) ; et
qu'un autre segment (28) sensiblement cylindrique de la surface extérieure du noyau, se rattachant audit segment rétréci (27) de la surface extérieure dudit noyau, en sens inverse de la direction longitudinale de vissage (23), délimite une chambre (29) destinée à recevoir de la poussière de perçage.

2. Vis selon la revendication 1, caractérisée par le fait
que la relation a ≥ b s'applique au rapport entre la longueur a du segment rétréci (27) de la surface extérieure du noyau, en sens inverse de la direction longitudinale de vissage (23), et la longueur b du segment cylindrique (28) de la surface extérieure du noyau en sens inverse de ladite direction longitudinale de vissage (23).
